# EUROPÄISCHE PATENTANMELDUNG

(11) **EP 2 605 339 A1**
(43) Veröffentlichungstag der Anmeldung: **19.06.2013**
(21) Anmeldenummer: 12007927.2
(22) Anmeldetag: 24.11.2012
(51) Int. Cl.: H01R 13/66

(54) **Steckverbinder**

(30) Priorität: 16.12.2011 DE 102011121318
(71) Anmelder: Amphenol-Tuchel Electronics GmbH, 74080 Heilbronn (DE)
(72) Erfinder: Ellwein, Christian, D-74523 Schwäbisch Hall (DE)

(57) **Zusammenfassung**

Die Erfindung betrifft einen Steckverbinder umfassend ein Gehäuse mit einem Kontakte aufweisenden Kontaktträger, wobei der Steckverbinder ferner über ein Temperaturabfragemittel verfügt.

## Beschreibung

Die Erfindung betrifft einen Steckverbinder mit einem integrierten Temperaturabfragemittel.

Die Erfindung betrifft insbesondere einen Steckverbinder mit integriertem Temperatursensor.

Eine Vielzahl der bekannten Steckverbinder sind für höhere Temperaturen, insbesondere für Temperaturen mit einer thermischen Belastung von über 120° C nicht mehr ausgelegt.

Somit ist die Strombelastbarkeit eines Steckverbinders eine Kenngröße, die das Einsatzgebiet eines Steckers abhängig von einem bestimmten Bauraum und bei Verwendung eines bestimmten Kontaktmaterials einschränkt bzw. limitiert.

Mit der Strombelastbarkeit eines Steckverbinders wird festgelegt, welcher Strom dauernd und gleichzeitig über alle Kontakte des Steckverbinders fließen darf.

Die Strombelastbarkeit ist eine genormte Größe und wird durch Prüfung ermittelt. Als Normungsgrundlage dient hierzu die Norm DIN EN 60512. Hierbei ist zu beachten, dass die Summe aus der Umgebungstemperatur und der durch die Strombelastung hervorgerufene Temperaturerhöhung die Grenztemperatur eines Steckverbinders nicht überschreiten darf. Diese Beziehung zwischen Dauerstrom bzw. Strom und der dadurch hervorgerufenen Temperaturerhöhung sowie der Umgebungstemperatur des Steckverbinders wird mittels einer Kurve, der so genannten Deratingkurve, dargestellt.

Grundsätzlich gilt, dass mit zunehmender Umgebungstemperatur die Strombelastbarkeit eines Steckverbinders sinkt.

Die Stromtragfähigkeit und damit die Strombelastbarkeit wird hauptsächlich von der Wahl der Kontaktmaterialien der verwendeten Kontakten, der Kontaktform und der Anzahl der Kontaktstellen sowie der Kontaktnormalkraft, dem Material und dem Wärmewiderstand des Gehäuses zur Umgebung und den sonstigen Eigenschaften der angeschlossenen Kabel beeinflusst.

Der Konstrukteur hat darüber hinaus als Hilfestellung Simulationsmodelle zur Hand. Durch geeignete Simulationsmodelle ist man in der Lage, schon in der Entwicklungsphase eines Steckverbinders die erforderliche Stromtragfähigkeit sicher zu stellen.

Allerdings ist bei der Anwendung bzw. auch schon bei der Entwicklung eines Steckverbinders eine Sicherheitsreserve auf Grundlage der DIN EN 60512 zu berücksichtigen, um sicher zu gehen, dass ein Steckverbinder nur innerhalb des angegebenen Temperaturbereiches, also unterhalb seiner Grenztemperatur eingesetzt werden kann.

So kann beispielsweise ein 4-poliger Rundsteckverbinder bei einer Umgebungstemperatur von 75° C etwa 35 Ampere-Stromstärke auf allen vier Kontakten führen, während er allerdings bei einer Umgebungstemperatur von 95° C lediglich 20 Ampere-Stromstärke tragen kann.

Da aber der Steckverbinder in den seltensten Fällen mit Dauerstrom und zwar mit dem maximalen Dauerstrom belastet wird und dabei gleichzeitig die maximale Umgebungstemperatur dauerhaft auf den Steckverbinder einwirkt, tritt eine für den Einsatzzweck limitierende Bedingung nur selten bis nie in der Praxis auf.

Anders ausgedrückt wird das Einsatzgebiet eines Steckverbinders, der bei normaler Umgebungstemperatur einsetzbar wäre, dadurch limitiert, dass zeitweise ggf. kurzzeitweise höhere Umgebungstemperaturen auftreten und diese daher die Stromtragfähigkeit des Steckverbinders insgesamt auf die durch die Deratingkurve ermittelte Stromstärke begrenzen.

Anders ausgedrückt ist es daher notwendig, einen Steckverbinder immer für Sonderfälle völlig überproportioniert auszulegen und zwar für seltene Konstellationen, die in den seltensten Fällen in der Praxis tatsächlich auftreten.

Folglich werden baulich größere und vom Materialaufwand teurere Steckverbinder benötigt, die auch bei der Integration, insbesondere in kleineren Applikationen Probleme bereiten.

Nachteilig ist folglich die Verwendung von überdimensionierten Steckverbindern und dem damit verbundenen hohen Kostenaufwand.

Aufgabe der vorliegenden Erfindung ist es daher, vorbesagte Nachteile zu überwinden und einen Steckverbinder bereit zu stellen, der universeller eingesetzt werden kann.

Diese Aufgabe wird gelöst mit einem Steckverbinder mit den Merkmalen nach Anspruch 1.

Weitere Ausgestaltungen der Erfindung finden sich in den Unteransprüchen.

Der Grundgedanke der Erfindung besteht darin, den Steckverbinder mit einem Abfragemittel auszustatten, um die Umgebungstemperatur und Umgebungsbedingungen zu ermitteln und daraufhin ggf. den Strom kurzzeitig zu reduzieren.

Letztendlich kann durch Skalierung des Stromes in Abhängigkeit von der tatsächlich vorhandenen Umgebungstemperatur auch ein Steckverbinder mit niedrigen Grenztemperaturwerten bei hohen Umgebungstemperaturen eingesetzt werden.

Dies wird dadurch gewährleistet, dass das Temperaturabfragemittel vorzugsweise über eine Steuerung den tatsächlichen Strom des Steckverbinders beeinflussen bzw. einstellen kann.

Anders ausgedrückt kann ein Steckverbinder, der für eine Strombelastbarkeit von 20 A ausgelegt ist bei einer Umgebungstemperatur von 80° C mit 20 A bestromt werden, nun mittels der erfindungsgemäßen Lösung auch bei Anwendungen, bei dem die Temperatur gelegentlich z. B. 90° C erreicht, eingesetzt werden.

Dies erfolgt durch eine Rückkopplung des Abfrageparameters des Temperaturabfragemittels und einer in Relation entsprechenden, vorzugsweise über eine Steuerung gesteuerte Anpassung des Stromes auf einen entsprechenden Stromwert.

Erfindungsgemäß wird somit ein Steckverbinder bereitgestellt, der über einen Kontaktträger verfügt, in dem Kontakte eingebracht sind mit einer Stromtragfähigkeit von X bei einer Umgebungstemperatur von Y, wobei benachbart, vorzugsweise unmittelbar benachbart zu den Kontakten des Steckverbinders, ein Temperaturabfragemittel angeordnet ist, welches die Temperatur Y abfrägt und den Strom X in Abhängigkeit der Temperatur regulieren kann.

In einer vorteilhaften Ausgestaltung der Erfindung verfügt das Temperaturabfragemittel ferner über eine Steuerung, die den Strom in Abhängigkeit von der Temperatur mit dem vorzugsweise aus der Deratingkurve entsprechenden Stromwert eingestellt.

In einer vorteilhaften Ausführungsform wird das Temperaturabfragemittel als ein Temperatursensor benachbart zu einem oder mehreren der Kontakte des Steckverbinders angeordnet.

In einer besonders vorteilhaften Ausführungsform werden gleichzeitig sämtliche Kontakte des Steckverbinders über ein Temperaturabfragemittel oder über mehrere Temperaturabfragemittel überwacht.

In einer weiteren vorteilhaften Ausführungsform kann ferner eine Steuerung im Steckverbinder integriert sein oder alternativ eine Anschlussvorrichtung zur Anbringung einer externen Steuerung vorgesehen sein.

In einer weiter vorteilhaften Ausführungsform kann ferner ein Strombegrenzer verwendet werden. Ein Strombegrenzer im Sinne der vorliegenden Erfindung dient der Begrenzung des Stromes in Abhängigkeit der Temperatur auf einen festgelegten Wert bzw. kann auch anstelle eines Strombegrenzers auch eine Abschaltvorrichtung vorgesehen werden.

Die Aufgabe der Abschaltvorrichtung ist darin zu sehen, dass bei Erreichen eines unzulässigen Strom-/Temperaturwertes oberhalb der Deratingkurve der Strom vollständig abgeschaltet wird bis zu einem Zeitpunkt, bei dem die Temperatur unter einen zulässigen Abfragewert sinkt.

Die Erfindung wird im folgenden anhand von Zeichnungen näher erläutert. Es zeigen:
Fig. 1 eine exemplarische Deratingkurve, die den zulässigen Strom in Abhängigkeit von der Umgebungstemperatur aufzeigt;
Fig. 2 eine perspektivische Ansicht eines erfindungsgemäßen Steckverbinders mit integriertem Temperaturabfragemittel.

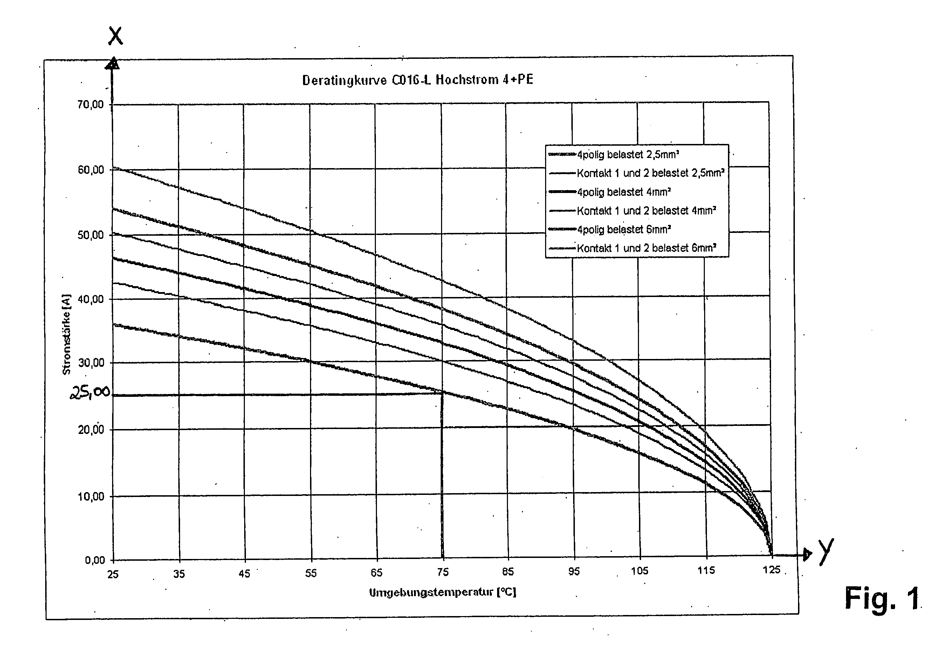

Die Fig. 1 zeigt unterschiedliche, lediglich beispielhafte Deratingkurven und zeigt darin die zulässige Stromstärke in Abhängigkeit von der Umgebungstemperatur. So ist ersichtlich, dass bei einem verwendeten Kunststoff, dessen zulässige Grenztemperatur 125° C beträgt, z. B. bei einer Umgebungstemperatur von 75° C eine maximale Strombelastung von 25 A gegeben ist.

Wenn somit erwartungsgemäß der Steckverbinder typischerweise bei Temperaturen unterhalb von 75° C eingesetzt wird, stellt dies insofern einen unkritischen Zustand dar, so lange die Stromstärke den Wert von 25 A nicht überschreitet.

Tritt aber zu gelegentlichen Zeitpunkten eine Situation ein, bei der die Umgebungstemperatur beispielsweise 85° C bis 95° C darstellt, würde sich der Steckverbinder, dem diese Deratingkurve zu Grunde liegt, nicht eignen und könnte nicht verwendet werden.

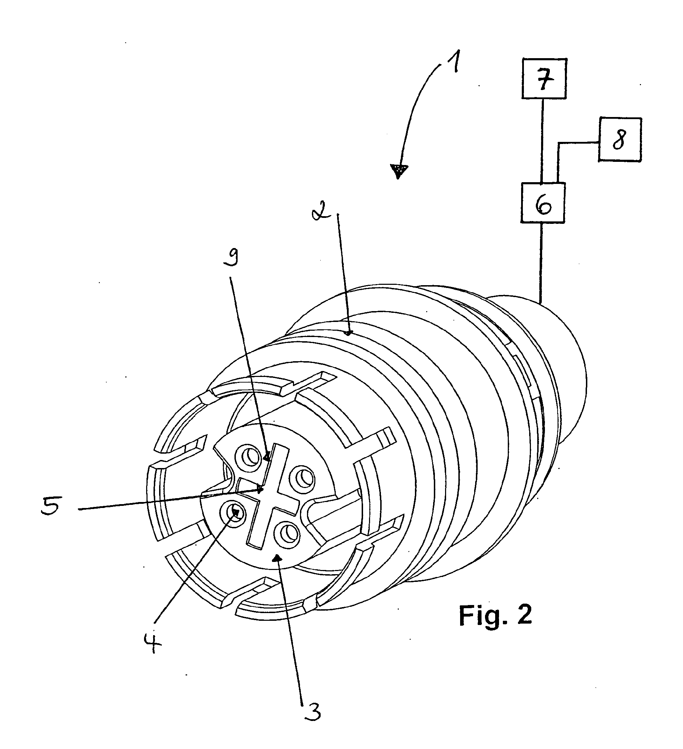

Mittels des erfindungsgemäßen Temperaturabfragemittels 5, welches in Fig. 2 dargestellt ist, kann allerdings ein erfindungsgemäßer Steckverbinder beim Auftreten von Temperaturen von beispielsweise 85° C (in einem solchen Fall) den Strom auf einen Wert von 22 A herunterregeln.

Erfindungsgemäß kann somit ein entsprechender Steckverbinder mit vorgegebener Deratingkurve und erfindungsgemäßen Temperaturabfragemitteln auch bei höheren Umgebungstemperaturen planmäßig verwendet werden.

In Fig. 2 ist ein Ausführungsbeispiel eines erfindungsgemäßen Steckverbinders 1 gezeigt. Der Steckverbinder 1 ist als Rundsteckverbinder ausgebildet und verfügt über ein Gehäuse 2. Selbstverständlich können auch jegliche andere Steckverbinderformen nach der erfindungsgemäßen Lehre ausgebildet sein.

Im Gehäuse 2 ist ein Kontaktträger 3 angeordnet, in dem Kontakte 4 eingebracht sind. Die Kontakte 4 weisen eine bei Umgebungstemperatur Y zulässige Stromstärke X auf. Der Zusammenhang der Kenngröße X (Stromstärke) und der Kenngröße Y (Umgebungstemperatur) ist exemplarisch in der untersten Kurve in der Fig. 1 für diesen Steckverbinder dargestellt.

Die Kontakte 4 sind hier als Buchsenkontakte ausgebildet, können aber auch als Stiftkontakte ausgebildet sein.

Mittig und symmetrisch zwischen den Kontakten 4 ist ein Temperaturabfragemittel 5 angeordnet, welches die Temperatur der Kontakte bzw. die Temperatur benachbart zu den Kontakten erfassen kann.

Das Temperaturabfragemittel 5 ist hier dargestellt als ein T-förmiger Temperatursensor 9. Alternativ können auch andere geeignete Sensoren, insbesondere Temperatursensoren, verwendet werden.

Mit Vorteil ist der Temperatursensor 9 gleichmäßig beabstandet zu allen vier Kontakten 4 angeordnet, um eine möglichst arithmetisch gemittelte und daher exakte Temperaturmessung zu erhalten.

Der Steckverbinder 1 verfügt ferner, wie angedeutet, über eine Steuerung 6 zum Steuern des Stromes X und einer mit der Steuerung 6 verbundenen Trennvorrichtung 7.

Ferner kann ein Strombegrenzer 8 mit der Steuerung 6 verbunden sein.

Mit Vorteil kann die Steuerung 6 zwischen einer Strombegrenzung und einer Stromtrennung auswählen.

Besonders vorteilhafterweise kann die Steuerung 6 unmittelbar im Steckverbinder 1 bzw. im Kontaktträger 3 des Steckverbinders 1 integriert sein und mittelbar oder unmittelbar mit dem Temperaturabfragemittel 5 gekoppelt sein.

Grundsätzlich können auch Kombinationen der zuvor genannten Merkmale in- oder außerhalb des Steckverbinders und der entsprechende Anschlussvorrichtungen am Steckverbinder 1 angeordnet sein.

Ferner können auch mehrere voneinander getrennte Temperaturabfragemittel verwendet werden, die die Temperatur an jeden Kontakt getrennt erfassen.

### Steckverbinder

- 1: Steckverbinder
- 2: Gehäuse
- 3: Kontaktträger
- 4: Kontakte
- 5: Temperaturabfragemittel
- 6: Steuerung
- 7: Trennvorrichtung
- 8: Strombegrenzer
- 9: Temperatursensor

- X: Stromstärke
- Y: Umgebungstemperatur

## Patentansprüche

1. Steckverbinder (1) umfassend ein Gehäuse (2) mit einem Kontakte (4) aufweisenden Kontaktträger (3), **dadurch gekennzeichnet, dass** der Steckverbinder (1) ferner über ein Temperaturabfragemittel (5) verfügt.

2. Steckverbinder (1) gemäß Anspruch 1, **dadurch gekennzeichnet, dass** das Temperaturabfragemittel (5) benachbart zu den Kontakten (4) angeordnet ist.

3. Steckverbinder (1) gemäß einem oder mehreren der vorhergehenden Ansprüche, **dadurch gekennzeichnet, dass** das Temperaturabfragemittel (5) ein Temperatursensor (9) darstellt.

4. Steckverbinder (1) gemäß einem oder mehreren der vorhergehenden Ansprüche, **dadurch gekennzeichnet, dass** der Steckverbinder (1) ferner über eine Stromsteuerung (6) zum Einstellen des Stromes über die Kontakte (4) verfügt.

5. Steckverbinder (1) gemäß einem oder mehreren der vorhergehenden Ansprüche, **dadurch gekennzeichnet, dass** die Steuerung (6) mit dem Temperaturabfragemittel (5) gekoppelt ist und die Steuerung (6) den StromX des Steckverbinders (1) in Abhängigkeit von der von dem Temperaturabfragemittel (5) ermittelten Temperatur einstellen kann.

6. Steckverbinder (1) gemäß einem oder mehreren der vorhergehenden Ansprüche, **dadurch gekennzeichnet, dass** der Steckverbinder (1) ferner über eine Trennvorrichtung (7) und/oder einen Strombegrenzer (8) verfügt.

7. Steckverbinder (1) gemäß einem oder mehreren der vorhergehenden Ansprüche, **dadurch gekennzeichnet, dass** das Temperaturabfragemittel (5) und/oder die Steuerung (6) und/oder die Trennvorrichtung (7) bzw. der Strombegrenzer (8) miteinander gekoppelt ausgebildet sind.
